Europäisches Patentamt

(19) **European Patent Office**

**Office européen des brevets**

(11) Publication number: **0 001 611**
A2

# (12) EUROPEAN PATENT APPLICATION

(21) Application number: **78101115.0**

(22) Date of filing: **10.10.78**

(51) Int. Cl.²: **G 01 N 27/12**
**G 05 F 3/10, G 08 B 17/10**
**H 01 C 7/10**

(30) Priority: **13.10.77 US 841802**

(43) Date of publication of application:
**02.05.79 Bulletin 79/9**

(84) Designated contracting states:
**BE CH DE FR GB LU NL SE**

(71) Applicant: **ADS Systems, Inc.**
**12729 Lake City Way**
**Seattle Washington 98125(US)**

(72) Inventor: **Dolan, James Patrick**
**8214 42nd Avenue Northeast**
**Seattle Washington 98115(US)**

(74) Representative: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P. Jakob, Dr. rer. nat.**
**G. Bezold Maximilianstrasse 43**
**D-8000 München 22(DE)**

(54) **Apparatus and method for detecting substances and for regulating current.**

(57) An apparatus and method for detecting liquids, vapors and gases, which includes a conventional detection device (10) operated in a non-linear region or current saturated condition so that it becomes sensitive even to substances having a Van der Waals' constant "a" of nine or less. A change in the level of either the current from battery (26) through the detection device (10) or the voltage across the detection device (10) occurs upon exposure of the device (10) to the substance being sensed. This current or voltage change is then detected by indicating means (28) to indicate the presence of the sensed substance. The relatively small current or voltage change associated with the detection device (10) may be easily sensed by placing the detection device (10) in a balanced bridge circuit. Further, the bridge circuit enables easy, accurate normalization of the apparatus in a reference environment. The non-linear characteristics of the detecting device (10) allow it to be employed as a regulator for supplying a constant current to a power consuming device.

0001611

TITLE MODIFIED
see front page

## BACKGROUND OF THE INVENTION
### Field of the Invention

The apparatus and method of the present invention relate to the art of sensing liquids, vapors and gases and to current regulating devices. More particularly, the present invention relates to such a method and apparatus for electrically sensing liquids, vapors and gases having virtually any Van der Waals' constant and a non-linear device for maintaining a relatively constant current through the device responsive to variations in voltage across the device.

### Description of the Prior Art

It is an increasingly important task in any industrial society to detect the presence of the liquid, vaporous and gaseous phases of many substances. For example, detection may be of consequence since the substance may be intrinsically hazardous due to its explosive, flammable, toxic or noxious character.

Detection may also be of import where, although the substance is not particularly perilous in itself, its presence is an indication of some undesirable condition. For example, a fire may be detected by its early products of combustion which, although toxic, may not be as hazardous as the fire itself. Similarly, the presence of a particular substance in the environment surrounding the sensing apparatus may indicate a leak in a supposedly tight system.

One of the many detection devices proposed is disclosed in U.S. Patent No. 3,045,198, issued July 17, 1962, to Dolan, et al. In basic form, the detection device disclosed therein includes a layer of resilient material whch is secured to a rigid base member. The active element, a stratum of discrete, electrically conductive, adsorbent particles, adheres to the layer of resilient material, whch serves to individually anchor each particle. A pair of spaced-apart electrodes which are in electrical contact with the stratum of conductive, adsorbent particles, completes the detetction device. As explained in the patent, the detection device stabilizes under reference conditions, such as upon exposure to pure atmospheric air. When the detection device is exposed to the liquid, vapor or gas being sensed, however, its resistance changes, usually by increasing.

It has been experimentally determined that when the detection device is operated in accordance with the teachings of the reference patent, the device is incapable of detecting substances having a Van der Waals' constant "a" of less than about 9, such as acetylene and ammonia, for example. This lack of sensitivity to certain other substances presented severe limitations on the usefulness of the referenced detection device.

After much experimentation attempting to provide a sensor capable of detecting substances having a Van der Waals constant of less than 9, it was noticed that an anomaly occurred at certain voltage levels. That is, as the voltage across the detection device was increased, the current through the device also increased linearly in accordance with Ohm's Law. However, as the voltage was increased past certain levels, the current rose to a certain value and failed to substantially increase further, a result not predicted by Ohm's Law.

While the device was being operated in this non-linear region it was exposed to various substances to determine if various substances could be detected. Surprisingly, the device was able to detect not only those substances having a Van der Waals' constant of greater than about 9, but it was even able to detect those substances having a constant of about 9 or less. In each case, upon exposure to these substances, an easily detectable current change through or voltage change across the current-satured detection device occurred.

It should be noted that there has been a change in the system of computing the Van der Waals' constant "a" since the referenced patent No. 3,045,198 was issued, as is reflected in the current edition of the Handbook of Chemistry and Physics, published by the Chemical Rubber Company of Cleveland, Ohio. The values of Van der Waals' constant stated herein conform to the current system.

SUMMARY OF THE INVENTION

In basic form, the sensing apparatus for liquids, vapors and gases of the present invention includes a power supply to supply sufficient electrical power to bias the detection device to the non-linear region. Indicating means electrically connected to the detection device signal the presence of the sensed substance.

Another aspect of the present invention utilize alarm means to alert the user to the presence of the detected substance.

In another aspect of the present invention, the detection device is installed in a four terminal bridge-type network to provide exceptional sensitivity to variations in the electrical properties of the device.

Other aspects of the present invention include examining the detection device for either variations in voltage across the device or variations in current through the device.

In a different aspect of the invention the detection device may be operated as a current regulator to supply a relatively constant current to a power consuming apparatus as the voltage supplied to device fluctuates.

BRIEF DESCRIPTION OF THE DRAWINGS

Fig. 1 is a simplified schematic diagram of the present invention utilizing a bridge-type circuit;

Fig. 2 is a schematic diagram of a simple alarm circuit which may be utilized with the bridge circuit shown in Fig. 1;

Figs. 3 and 4 are simplified schematic diagrams of the present invention utilizing a current source and a voltage source, respectively; and

Fig. 5 is a tabulation of results obtained utilizing the form of the present invention shown in Fig. 1.

DESCRIPTION OF THE PREFERRED EMBODIMENTS

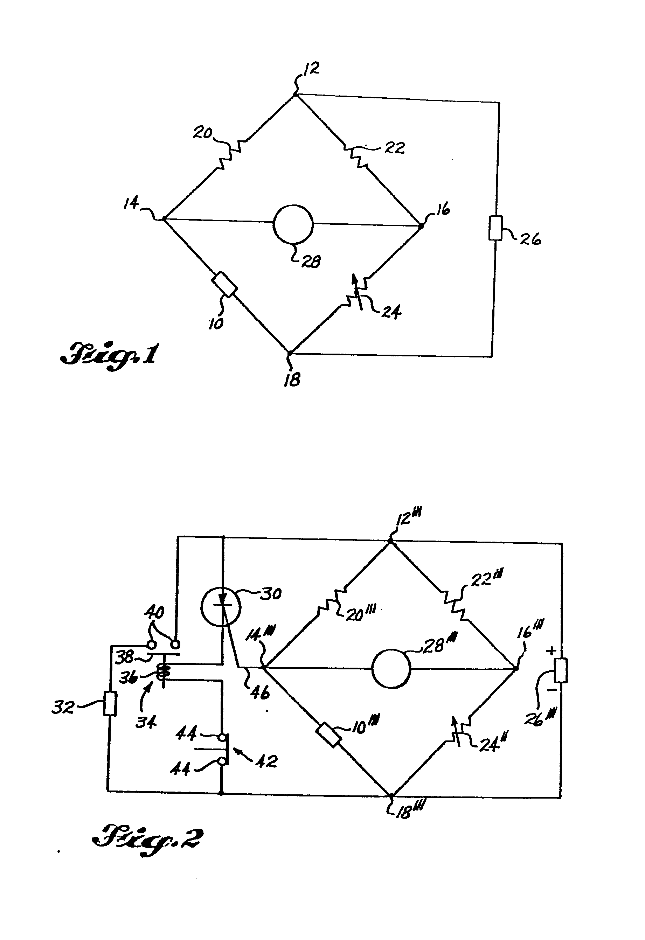

Fig. 1 illustrates the sensing apparatus of the present invention as comprising a detection device installed in a bridge circuit and operating in a non-linear region. The bridge circuit is of conventional design and includes a network having first, second, third and fourth terminals 12, 14, 16 and 18, respectively. A first known resistance 20 is connected across terminals 12, 14; a second known resistance 22 is connected across terminals 12, 16; and a variable resistance 24 is connected across terminals 16, 18. Although only resistance 24 is shown to be variable, it is to be understood that any or all of the known resistances 20, 22, 24 could be made variable. A detection device 10, constructed in accordance with the disclosures contained in U.S. Patent No. 3,045,198, is connected across terminals 14, 18.

By way of nonlimiting example, the detection device 10 comprises an essentially nonconducting base or body in the form of a standard cylindrical one-half watt resistor having a resistance of above 10 million ohms and having a conducting lead at each end. The body of the resistor is then coated with a thin layer of adhesive, such as adhesive type 3145 RTV manufactured by Dow Corning Company. While the adhesive is still tacky, a layer of conductive carbon particles, such as No. 2 powdered flake manufactured by the Joseph Dixon Crucible Co. of Jersey City, New Jersey, is applied to the body and anchored thereto by the adhesive layer. The detection device 10 is completed by establishing a conductive path between the device's terminals and the conductive particles by means of applying silver paint therebetween. When tested with a standard ohmmeter, the detection device 10 was found to have a resistance of about 900 ohms. It will be understood, however, that the resistances of the devices will vary depending upon such factors as particle composition and body configuration.

In order to determine at what voltage and current the detection device 10 enters the non-linear region, the device 10 is placed in a simple series circuit, not illustrated, comprising the device 10, a conventional variable D.C. voltage supply and a conventional milliammeter. As the voltage across the detection device 10 is increased corresponding increases in current through the device 10 are observed. Until about 10 voltage D.C. the current through the detection device 10 is a relatively linear function of the applied voltage. Beyond about 10 volts, however, the current is substantially constant at about 7.5 milliamperes. Thus, at about 10 volts and higher the device 10 was determined to be current saturated or non-linear since small changes in voltage across the device failed to bring substantially the corresponding current changes through the device 10 which would ordinarily have been predicted by Ohm's Law. Of course, the voltage range at which any particular detection device 10 enters the non-linear region will vary according to the particular construction of the device 10 used.

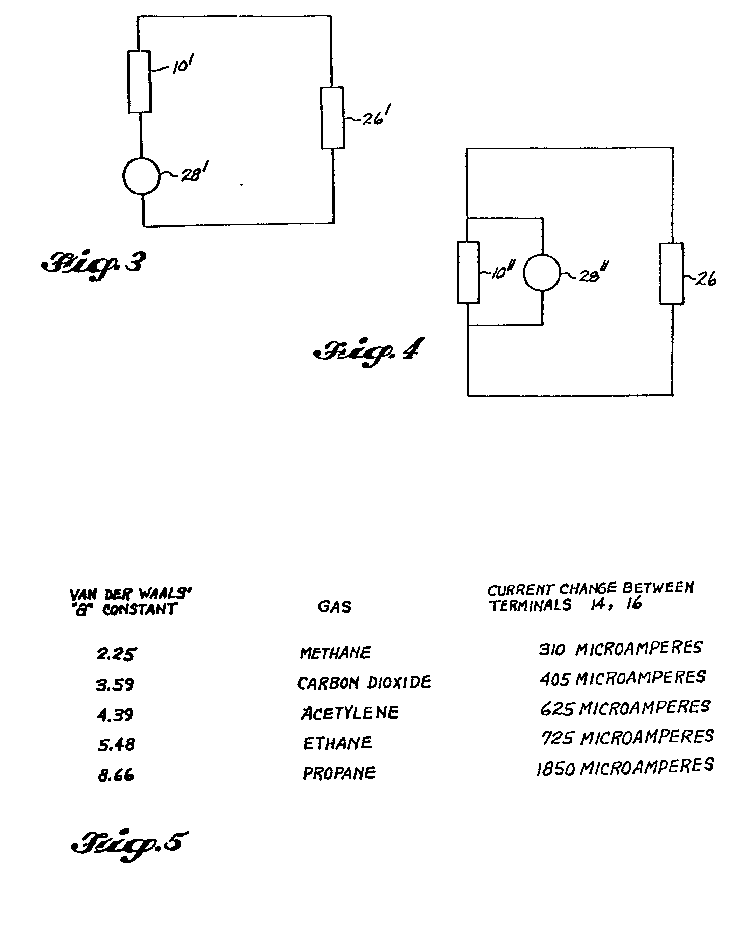

Referring again now to Fig. 1, a power supply 26 places about 30 volts D.C. between terminals 12, 18 thereby biasing the detection device 10 into its non-linear region. Indicating means 28 are then connected across terminals 14, 16. The indicating means may comprise any of a variety of equipment which are responsive to the voltage between terminals 12, 16, including a circuit for sounding an audio, visual or other alarm to signal the presence of the sensed substance. Such a circuit is shown by way of nonlimiting example in Fig. 2.

Referring now to Fig. 2, we see that it includes a bridge circuit similar to that shown in Fig. 1, with those corresponding elements which are the same as those in Fig. 1 identified by a triple prime in Fig. 2. Element 30 is an SCR (Silicon Controlled Rectifier), element 32 is a Sonalert audio-type alarm No. SC628 manufactured by the P. R. Mallory Co. of Indianapolis, Indiana, and element 34 is a 600 ohm relay having an actuating coil 36, contactor 38 and output terminals 40. Element 42 is a normally closed reset switch having terminals 44. In use, the bridge portion of the circuit shown in Fig. 2 is operated exactly as the bridge circuit shown in Fig. 1 with the power supply means 26''' supplying 30 volts D.C. across terminals 12''', 18''' which is sufficient to cause the detection device 10''' to operate in the non-linear region. Variable resistor 24''' is adjusted to balance the bridge circuit while the detection device 10''' is exposed to a reference environment, such as room air.

Upon exposure of the detection device 10''' to a substance to which it is sensitive, such as carbon dioxide, its electrical properties change, generally reflected by a decrease in the flow of current therethrough or an increase in the voltage thereacross. This causes an unbalance of the bridge circuit which is sensed by the SCR through lead 46, causing the SCR to become conductive and supply current to the actuating coil 36 of the relay 34 causing contactor 38 to close across terminals 40. This supplies power to the audio alarm 32 to signal the presence of the sensed substance. The alarm is silenced by opening switch 42 which cuts off power to the actuating coil 36 of the relay 34, causing the contactor 38 to open, thereby interrupting the supply of power to the alarm 32. Opening of the switch 44 also causes the SCR 30 to cease conducting and upon removal of the detection device 10''' from the presence of the sensed substance

- 7 -                0001611

for a period of time sufficient to allow the sensed substance to dissipate therefrom, the switch 44 may be closed again without reactivation of the alarm 32, thereby resetting the circuit shown in Fig. 1 for use again.

Returning now to Fig. 1, in operation the sensing apparatus is first exposed to a reference environment, such as pure atmospheric air, while the detection device 10 is operating in its non-linear region. After the detection device has stabilized in the reference environment, one or more of the known resistances, and preferably variable resistor 24, are varied until the voltage across terminals 14, 16 is zero as indicated by the indicating means 28. When the detection device 10 is exposed to the substance to be sensed, its electrical properties change, usually decreasing the current passing therethrough or increasing the voltage thereacross to cause an imbalance of the bridge circuit. This imbalance is detected by the indicating means 28 to signal the presence of the sensed substance. Upon removal of the detection device from the presence of the sensed substance, the device 10 gradually returns to its initial condition.

Tabulated in Fig. 5 are sample test results obtained using the 900 ohm detection device 10 previously described and a voltmeter as the detection device 28.

A bridge circuit is preferred for its relatively great sensitivity and ability to detect the electrical changes occurring in the current saturated detection device 10 when it is exposed to the sensed substance, as reflected by the voltage and/or current imbalances caused in the balanced bridge circuit thereby.

Of course, other circuit arrangements are possible such as the simple series circuits illustrated in Figs. 3 and 4. In Fig. 3, the power supply means 26' places a constant voltage across the detection device 10' having a magnitude sufficient to bias the detection device into its non-linear region. The indicating means 28', in this case a milliammeter, detects the changes in current through the detection device 10 caused when the detection device is exposed to the sensed substance. Removal of the detection device 10 from the presence of the sensed substance gradually returns the detection device to its initial condition.

Referring now to Fig. 4, the circuit shown therein comprises a power supply generating a constant current through the detection device 10''. The magnitude of the current through the device is sufficient to place the device in a non-linear region. In other words, as the current through the device increases from zero, the voltage across the device increases accordingly in a substantially linear manner. When the non-linear region is entered, however, the rate of voltage increases for a given current greatly increases. The voltage across the detection device 10 is measured by a voltmeter 28'' which detects voltage variations acaross the detection device when the detection device is exposed to the sensed substance. Upon removal of the detection device 10 from the presence of the sensed substance, the detection device gradually returns to its initial condition.

The operation of the circuits shown in Figs. 3 and 4 are similar, and will be described together. First, the range at which the detection device 10', 10''; enters the non-linear region is determined as has been described in reference to detection device 10. Next, the voltage supply 26' or current supply 26'' are selected to provide sufficient power to the device 10', 10'' to cause it to operate in a current saturated or non-linear condition, and the device 10', 10'' is exposed to a reference environment such as room air and allowed to normalize. Then, when the device 10', 10'' is exposed to the sensed substance its electrical properties change. This change is reflected by a change in current passing through the device 10' in the circuit of Fig. 3 and by a change in voltage across the dvice 10'' in the circuit of Fig. 4, through which change is reflected by the indicating means 28', 28'', to signal the presence of the sensed substance. Upon return of the device 10', 10'' to the reference environment, the device soon returns to its initial condition.

It is well recognized that a perfect voltage or current source does not exist. That is, all current sources have a less-than-infinite output impedance and all voltage sources have a greater-than-zero output impedance. Consequently, a change in current through the device 10' when powered by a voltage source 26' as in Fig. 3 also results in a voltage change across the device 10' since the change in current through the output impedance of the voltage source produces a change in voltage across the output impedance. Similarly, a change in voltage across the device 10'' when powered by a current source 26'' as in Fig. 4 also results in a current change through the device 10'' since the change in voltage across the output impedance of the current source produces a change in current through the output impedance. It is not critical, then, whether the detection device is driven by a voltage or current source, or whether the voltage across or current through the device is measured. Instead, the invention resides in the knowledge that the detection device can be biased into a non-linear region, and that in this non-linear region the operating conditions or electrical properties of the device change when the device is exposed to a substance having a Van der Waals constant either above or below 9.

Thus, the present invention includes any electrical arangement by which the changes in the electrical properties of a current saturated detection device induced by the sensed substance are used to indicate the presence of the sensed substance. A multitude of arrangements utilizing the changing electrical properties of a detection device biased into its non-linear region will readily occur to those skilled in the art and the simple bridge, parallel and series circuits illustrated in Figs. 1-5 are merely by way of illustrative, nonlimiting example.

The surprisingly non-linear characteristics of the device allow it to be readily adapted as a current regulator since the current through the device is relatively insenstive to variations in the voltage across the device when it is biased in its non-linear region. For example, the device may be placed in series with a power consuming apparatus shown schematically as 10' in Fig. 3 adapted to receive a specific current. The device 26' will then insure that the current supplied to the apparatus 10' by the power supply, shown schematically as 28', is relatively constant as the voltage applied to the device 26' varies. The device may thus be operated as a current regulator in a manner analogous to a zener diode operated as a voltage regulator.

0001611

CLAIMS:

1.  A sensing apparatus for liquid, vaporous and gaseous substances, comprising:

detection device means of the type having a plurality of independently anchored, electrically conductive particles which are adsorbently sensitive to liquids, vapors or gases, said particles being arranged in sequential contact to form one or more conductive paths between separated points;

power supply means electrically connected to the detection device means and supplying sufficient electrical power to the detection device means to cause said detection device means to operate in a non-linear region; and

indicating means electrically connecting to the detection device means to indicate when an electrical property of said detection device means changes responsive to said detection device means being exposed to the substance being sensed.

2.  The sensing apparatus of claim 1, wherein the indicating means further includes alarm means to indicate the presence of the sensed substance.

3.  The sensing apparatus of claim 1 further including a four-terminal bridge network having a first known resistance connected between the first and second terminals, a second known resistance connected between the first and third terminals and a third known resistance connected between the third and fourth terminals, at least one of the resistances being variable, and wherein said detection device means are connected between the second and fourth terminals, said power supply means being connected between the first and fourth terminals, and the indicating means are connected between the second and third terminals.

4.  The sensing apparatus of claim 3, wherein the indicating means detect current changes between the second and third terminals.

5. Sensing apparatus according to claim 3, wherein the indicating means detect the voltage changes across the second and third terminals.

6. The sensing apparatus of claim 1 wherein said power supply means generates a substantially constant voltage between the first and fourth terminals of said bridge.

7. The sensing apparatus of claim 1 wherein said power supply means generates a substantially constant current between the first and. fourth terminals of said bridge.

8. The sensing apparatus of claim 1, wherein the detection device means, power supply means and indicating means are electrically connected to form a series circuit, and wherein said power supply means produces a substantially constant voltage and said indicating means detects the current changes through the series circuit responsive to the presence of the sensed substance.

9. The sensing apparatus of claim 1, wherein the detection device means and the power supply means are electrically connected to form a parallel circuit, and wherein said power supply means produces a substantially constant current and said indicating means are connected in parallel across the detection device means to detect the voltage across the detection device means responsive to the presence of the sensed substance.

10. A method of sensing liquids, vaporous and gaseous substances, comprising:

providing a detection device of the type having a plurality of independently anchored, electrically conductive particles which are adsorbently sensitive to liquids, vapors or gases, said particles being arranged in sequential contact to form one or more conductive paths between separated points;

biasing said detection device into a non-linear region; and

detecting a change in the electrical properties of said device responsive to said detection device being exposed to the substance being sensed.

11. The method of claim 10, further comprising:

forming a four terminal electrical network by connecting a first known resistance between the first and second terminals, connecting a second known resistance between the first and third terminals, connecting a third known resistance between the third and fourth terminals, at least one of the resistances being variable, connecting the indicating means between the second and third terminals, and connecting said detection device between the second and fourth terminals;

supplying power between the first and fourth terminals sufficient to force the detection device to operate in its non-linear region; and

exposing the detection device means sequentially to a reference environment and to a sensed substance thereby changing an electrical property of said device.

12. The method of claim 11 wherein said indicating means senses the change in current between the second and third terminals when the detection device is exposed to the sensed substance.

13. The method of claim 11 wherein said indicating means senses the change in voltage between the second and third terminals when the detection device is exposed to the sensed substance.

14. The method of claim 10, further comprising:

forming a series circuit with a voltage supply means and said detection device, said voltage supply generating a sufficient output across the detection device means to operate the detection device in its non-linear region;

electrically connecting current indicating means in series with the series circuit; and

sequentially exposing the detection device to a reference environment and to a sensed substance and examining said current indicating means for a change of current through said circuit in response thereto.

15. The method of claim 10, further comprising:

forming a circuit with a current supply means and said detection device connected in parallel;

adjusting the current supply means to generate current through the detection device sufficient to operate the detection device in its non-linear region;

electrically connecting voltage indicating means across said detection device; and

sequentially exposing the detection device to a reference environment and to a sensed substance and examining said voltage indicating means for a change in voltage across said detection device in response thereto.

16. A method of regulating current supplied to a power consuming device, comprising:

providing a detection device of the type having a plurality of independently anchored, electrically conductive particles which are absorbently sensitive to liquids, vapors or gases, said particles being arranged in sequential contact to form one or more conductive paths between separated terminals;

electrically connecting said power consuming device to one of said separated terminals; and

electrically connecting power supply means between the other of said terminals and said power consuming device, said power supply means generating sufficient power to cause said detection device to operate in its non-linear region such that the current through said power consuming device is relatively constant as the voltage at the output of said power supply means fluctuates.

17. A current regulated power consuming circuit, comprising detection device means connected in series with said power consuming circuit, said detection device means being of the type having a plurality of independently anchored electrically conductive particles which are adsorbently sensitive to liquids, vapors or gases, said particles being arranged in sequential contact to form one or more conductive paths betwen separated points, said series combination of said detection device means and power consuming device being connected across power supply means adapted to produce sufficient power to cause said detection device means to operate in its non-linear region.

*Fig.1*

*Fig.2*

0001611

**Fig.3**

**Fig.4**

| VAN DER WAALS' "a" CONSTANT | GAS | CURRENT CHANGE BETWEEN TERMINALS 14, 16 |
|---|---|---|
| 2.25 | METHANE | 310 MICROAMPERES |
| 3.59 | CARBON DIOXIDE | 405 MICROAMPERES |
| 4.39 | ACETYLENE | 625 MICROAMPERES |
| 5.48 | ETHANE | 725 MICROAMPERES |
| 8.66 | PROPANE | 1850 MICROAMPERES |

**Fig.5**